# EUROPEAN PATENT APPLICATION

(11) **EP 4 847 903 A1**
(43) Date of publication of application: **02.12.2026**
(21) Application number: 25195875.7
(22) Date of filing: 14.08.2025
(51) Int. Cl.: G01N 15/14, G01J 1/44, G01N 15/10, G01N 15/1434

(54) **SYSTEMS AND METHODS FOR DETECTOR GAIN COMPENSATION FOR TEMPERATURE VARIATIONS**

(30) Priority: 27.05.2025 US 202519219862
(71) Applicant: BECTON, DICKINSON AND COMPANY, Franklin Lakes NJ 07417-1880 (US)
(72) Inventor: Balaji Ramachandran, Supriya, Fremont, California, 94538 (US); Owsley, Keegan, Campbell, California, 95008 (US)
(74) Representative: Bals & Vogel Patentanwälte PartGmbB

(57) **Abstract**

Aspects of the invention include flow cytometer systems. Flow cytometer systems according to the invention comprise: a light source configured to irradiate a sample comprising a particle in a flow stream; a light detection system configured to detect light from the irradiated particle; a temperature sensor configured to measure a temperature of at least a portion of the light detection system; and a processor comprising memory operably coupled to the processor, wherein the memory comprises instructions stored thereon, which when executed by the processor, cause the processor to: receive the measured temperature; determine a reverse bias voltage based at least in part on a target gain of the light detection system and the measured temperature; and control the light detection system to apply the reverse bias voltage. Aspects of the invention additionally include methods for practicing the invention. Non-transitory computer readable storage mediums are also provided.

## Description

### INTRODUCTION

**The** characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

The parameters measured using a flow cytometer (i.e., a particle analyzer) typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules or fluorescent dye. Different particle types can be identified by their light scatter characteristics and fluorescence emissions resulting from labeling various proteins (e.g., cell proteins) or other constituents with fluorescent dye-labeled antibodies or other fluorescent probes. Forward-scattered light, side-scattered light and fluorescent light is detected by a light detection system positioned within the flow cytometer.

The behavior of light detection systems, including light detectors thereof, is affected by the temperature of such components. For example, a gain associated with a light detection system, or a photodetector thereof, can be affected by the temperature of such components. This temperature dependence can pose a challenge to consistently detecting accurate readings from the light detection system when signal fluctuations may be based on the particles under examination or are temperature-based fluctuations.

### SUMMARY

The inventors have realized there remains a need for further improvements in light detection systems that configure the light detection systems to account for a temperature associated with the light detection system. To this end, changing the reverse bias voltage applied to a light detection system, or a light detector thereof, affects the gain of the light detection system. The inventors have discovered that changing a reverse bias voltage based on a measured temperature associated with the light detection system enables the light detection system to apply consistent gain, even as temperatures fluctuate during use of the flow cytometer system. The inventors have further discovered that models, such as artificial neural network models or curve-fitting models, can be used to estimate a reverse bias voltage to achieve a target gain of the light detection system.

Embodiments of the disclosure offer various advantages over existing techniques, including, for example, maintaining a consistent gain of the light detection system, or a light detector thereof. Embodiments are able to achieve such advantages by configuring a light detection system based on a temperature measurement. For example, certain embodiments maintain a consistent gain of the light detection system by adjusting the reverse bias voltage based on temperature measurements. Embodiments of the disclosure are able to maintain a consistent gain of the light detection system as the temperature of the light detection system changes, e.g., during use in the field.

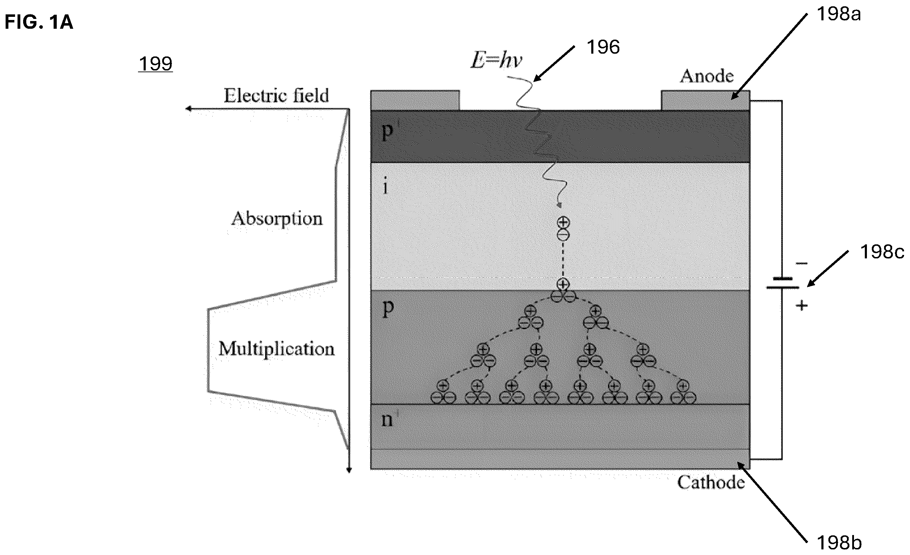

**FIG. 1A** illustrates reverse bias voltage in the context of an example photodetector that may be employed in embodiments of the disclosure. Photodetector 199 is an avalanche photodiode. Avalanche photodiode 199 may be present in a light detection system of an embodiment of the disclosure. Avalanche photodiode 199 includes anode 198a and cathode 198b electrical contacts. A reverse bias voltage is applied to avalanche photodiode 199 by connecting a voltage source 198c to the anode 198a and cathode 198b. As a result of applying the reverse bias voltage 198c, the effect of a single photon 196 interacting with avalanche photodiode 199 is multiplied such that a measurable current is generated by avalanche photodiode 199. In some cases, a reverse bias voltage 198c of between 100 V and 200 V is applied to avalanche photodetectors, for example. However, other reverse bias voltages may be applied depending on the devices and/or the desired gain characteristics.

The gain characteristics of avalanche photodiode 199 are affected by the temperature of the avalanche photodiode 199. For example, heat can increase the mean free path of electrons, reducing impact ionizations. In some cases, trapped phonons cause electron-hole pairs to recombine, which can have the effect of reducing the gain of the avalanche photodiode 199. When such photodetectors are employed in connection with flow cytometric systems, they can exhibit gain errors as the temperature of aspects of the light detection system of the flow cytometric system changes during use. It is desirable in connection with providing system stability that photodetector gain should not deviate, or should only minimally deviate, for expected differences in system temperature. Therefore, embodiments of the disclosure are configured to determine a reverse bias voltage to apply to a light detection system at measured temperature, such as, for example, avalanche photodiode 199, to achieve a target gain.

Aspects of the invention include flow cytometer systems. Flow cytometer systems according to the invention comprise: a light source configured to irradiate a sample comprising a particle in a flow stream; a light detection system configured to detect light from the irradiated particle; a temperature sensor configured to measure a temperature of at least a portion of the light detection system; and a processor comprising memory operably coupled to the processor, wherein the memory comprises instructions stored thereon, which when executed by the processor, cause the processor to: receive the measured temperature; determine a reverse bias voltage based at least in part on a target gain of the light detection system and the measured temperature; and control the light detection system to apply the reverse bias voltage. Aspects of the invention additionally include methods for practicing the invention. Non-transitory computer readable storage mediums are also provided.

### BRIEF DESCRIPTION OF THE FIGURES

The disclosure may be best understood from the following detailed description when read in conjunction with the accompanying drawings. Included in the drawings are the following figures:

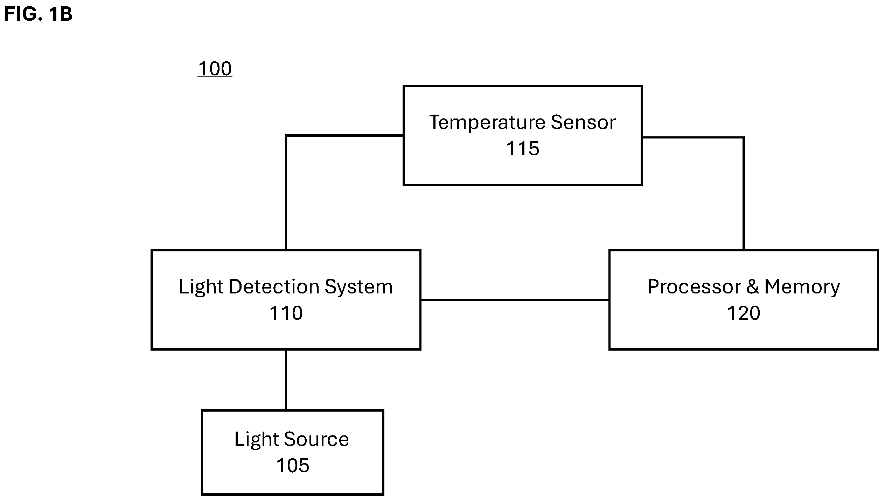

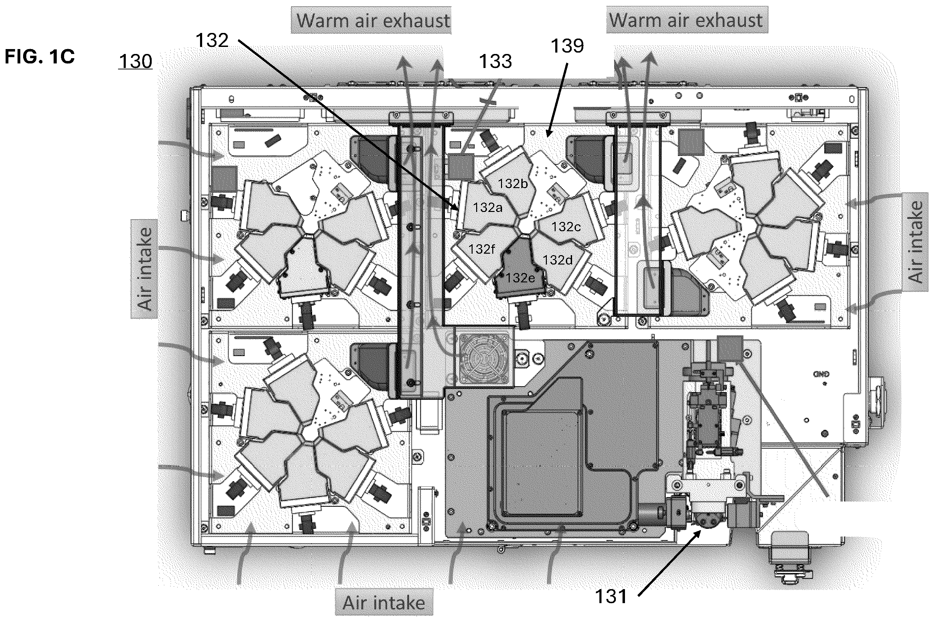

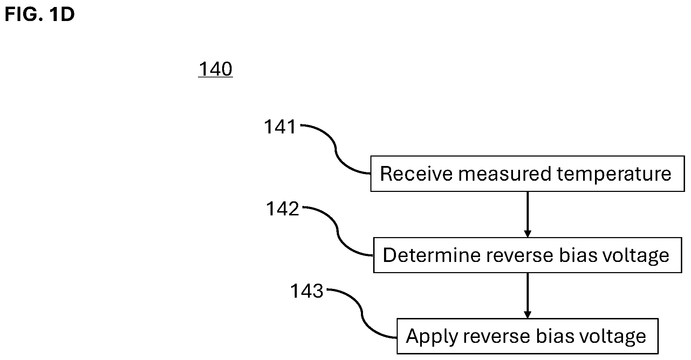

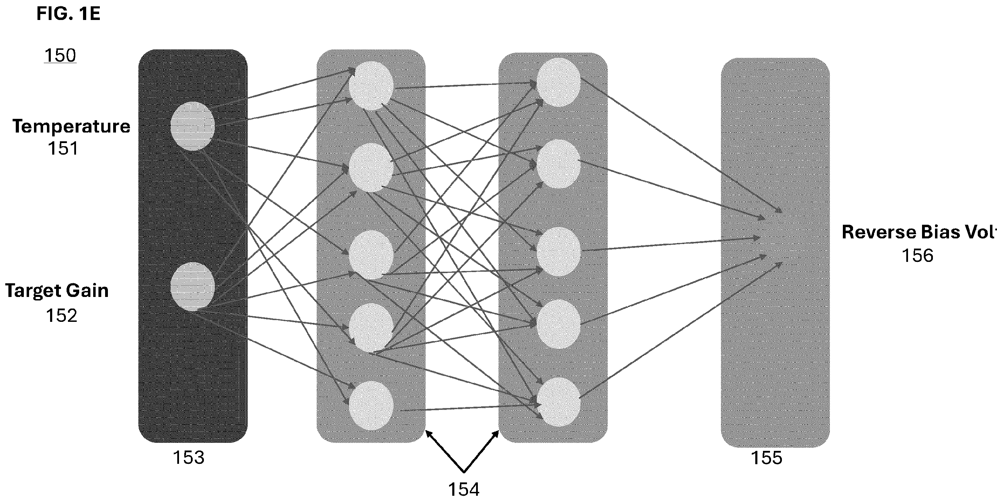

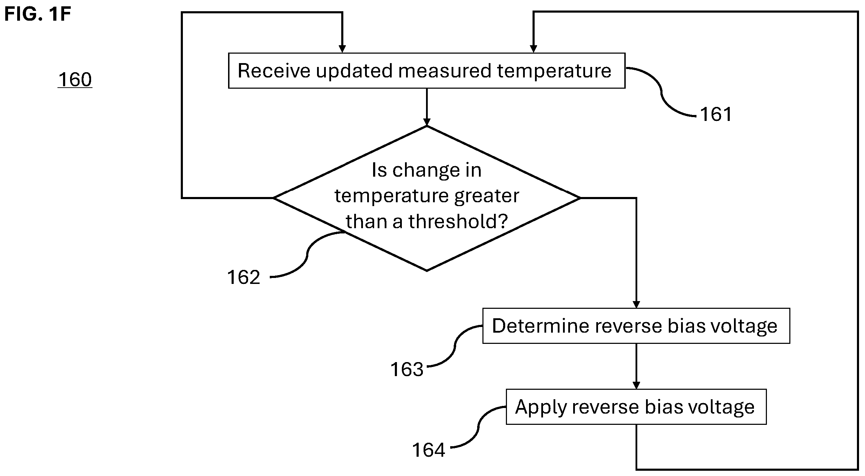

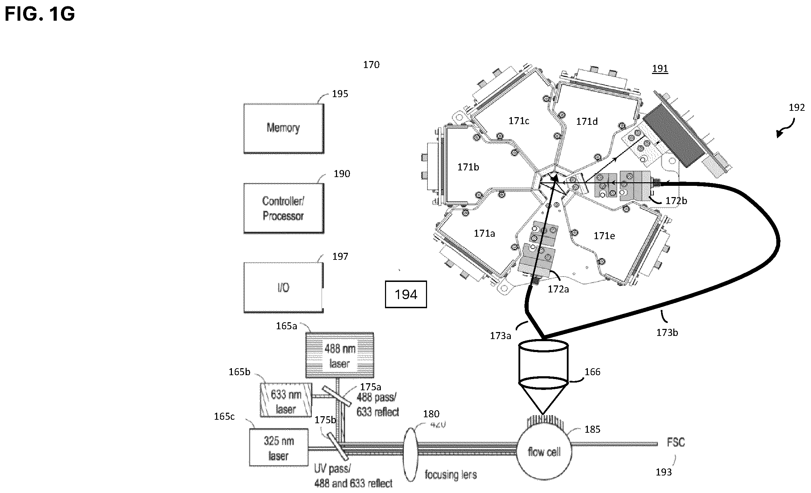

**FIG. 1A** presents an avalanche photodiode with a reverse bias voltage applied to it. **FIG. 1B** presents a schematic of a flow cytometer system according to an embodiment. **FIG. 1C** presents aspects of a flow cytometer system according to another embodiment with a clustered wavelength division (CWD) light detection system. **FIG. 1D** presents a flow diagram for determining and applying a reverse bias voltage according to an embodiment. **FIG. 1E** presents a diagram of a deep learning model for determining a reverse bias voltage based on a measured temperature and target gain according to an embodiment. **FIG. 1F** presents another flow diagram for periodically or continuously determining and applying a reverse bias voltage according to an embodiment. **FIG. 1G** presents another diagram a flow cytometer system according to another embodiment with a clustered wavelength division (CWD) light detection system.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIG. 7** depicts aspects of a computer-controlled system according to certain embodiments.
**FIGS. 8A-8B** depict aspects of embodiments of flow cytometer systems according to embodiments of the disclosure.
**FIGS. 9A-9B** present empirical gain errors resulting from applying reverse bias voltages in a system where such voltages are determined by deep learning-based models and LOWESS-based models.
**FIG. 10** presents a plot showing the effect of temperature on device gain.
**FIG. 11** presents empirical CPU latencies for determining a reverse bias voltage with a deep learning model according to an embodiment of the disclosure.
**FIG. 12** presents variation of temperature measurements measured at different locations of a light detection system according to an embodiment.
**FIGS. 13A-13C** present empirical data related to gain-temperature relationships in embodiments of the present disclosure.

In the figures, elements having the same or similar reference numerals have the same or similar features, unless explicitly stated otherwise.

### DETAILED DESCRIPTION

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. § 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. § 112 are to be accorded full statutory equivalents under 35 U.S.C. § 112.

### FLOW CYTOMETER SYSTEMS

Aspects of the invention include a flow cytometer system comprising: a light source configured to irradiate a sample comprising a particle in a flow stream; a light detection system configured to detect light from the irradiated particle; a temperature sensor configured to measure a temperature of at least a portion of the light detection system; and a processor comprising memory operably coupled to the processor, wherein the memory comprises instructions stored thereon, which when executed by the processor, cause the processor to: receive the measured temperature; determine a reverse bias voltage based at least in part on a target gain of the light detection system and the measured temperature; and control the light detection system to apply the reverse bias voltage.

**FIG. 1B** depicts a schematic of an exemplary flow cytometer system according to an embodiment. System 100 includes light source 105, light detection system 110, temperature sensor 115 and processor and memory 120. Light source 105 may be any convenient light source configured to irradiate a sample comprising a particle in a flow stream. Details regarding light sources of interest, as well as details regarding using a light source to irradiate a sample comprising a particle in a flow stream, are described herein.

### Light detection systems:

As described above, system 100 also includes light detection system 110 configured to detect light from the irradiated particle. Embodiments comprise any convenient light detection system, i.e., light detection systems capable of detecting light from a particle of a sample that is irradiated in a flow stream, as such light detection systems are described in detail herein. Light detection system 110 may include one or more photodetectors, such as avalanche photodiode 199.

In some cases, light detection systems are clustered wavelength division (CWD) light detection system. CWD systems of interest include wavelength separators that pass light having a predetermined spectral range, as well as light detection modules in optical communication with each wavelength separator. In embodiments, each light detection module includes a plurality of photodetectors and one or more optical components configured to convey light having a predetermined sub-spectral range to the photodetectors. Embodiments of CWD light detection systems, therefore, separate collected light into spectral ranges and require fewer reflections of the light in order to generate a plurality of sub-spectral ranges detected by photodetectors. Further details regarding aspects of embodiments of the disclosure, including further details regarding CWD light detection systems, are described in U.S. Patent No. 11,821,830 as well as U.S. Application No. 17/870,187 published as US 2023/0037799 A1, the disclosures of which are herein incorporated by reference.

In embodiments, light detection systems are configured to apply a reverse bias voltage. In some cases, applying a reverse bias voltage comprises applying a reverse bias voltage to one or more photodetectors of the light detection system. For example, in embodiments in which the light detection systems comprise an avalanche photodiode, such as avalanche photodiode 199, such light detection system may apply a reverse bias voltage by applying a voltage 198c to anode 198a and cathode 198b of photodetector 199. Some embodiments of light detection systems comprise a voltage source, such as a variable voltage source, electrically connected to one or more photodetectors for supplying one or more reverse bias voltages to the one or more photodetectors of the light detection system. In such embodiments, controlling the light detection system to apply the reverse bias voltage comprises controlling the reverse bias voltage by the variable voltage source.

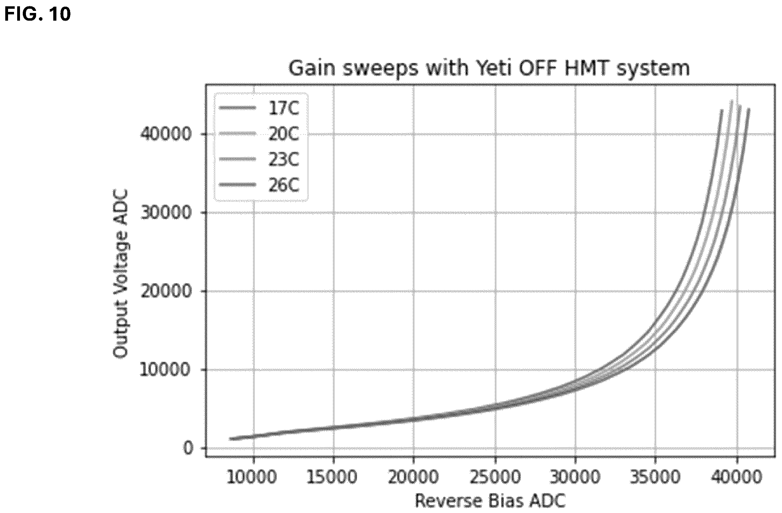

The gain of light detection systems, or of one or more photodetectors thereof, is affected by the reverse bias voltage applied by the light detection system, e.g., to one or more photodetectors thereof (see, e.g., **FIG. 10**). Embodiments of photodetector devices are reversed biased so that a small amount of light produces a measurable current in the photodetector. Temperature also affects gain characteristics of light detection systems, such that, for example, a first reverse bias voltage is applied at a first temperature to achieve a target gain, whereas a second reverse bias voltage is applied at a second temperature to achieve the same target gain (see, e.g., **FIG. 10**).

Embodiments of light detection systems include a photodetector. Any convenient photodetector capable of detecting light from a particle of a sample that is irradiated in a flow stream may be employed. Details regarding photodetectors of interest are described herein. In some cases, the photodetector is a solid state detector, such as, for example, a semiconductor detector, such as, for example, an avalanche photodiode or a PIN photodiode.

As described herein, the photodetectors of embodiments of light detection systems may be any convenient optical sensor, such as active-pixel sensors (APSs), avalanche photodiodes, image sensors, charge-coupled devices (CCDs), intensified charge-coupled devices (ICCDs), complementary metal-oxide semiconductor (CMOS) image sensors or N-type metal-oxide semiconductor (NMOS) image sensors, photon counters, bolometers, photoresistors, photodiodes, photomultiplier tubes, phototransistors, quantum dot photoconductors or photodiodes and combinations thereof, among other types of photodetectors. In certain embodiments, photodetectors include photomultiplier tubes, such as metal package photomultiplier tubes.

Photodetectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.

In embodiments, the photodetectors are configured to measure light continuously or in discrete intervals. In some instances, photodetectors of interest are configured to take measurements of the collected light continuously. In other instances, the photodetectors are configured to take measurements in discrete intervals, such as measuring light every 0.001 millisecond, every 0.01 millisecond, every 0.1 millisecond, every 1 millisecond, every 10 milliseconds, every 100 milliseconds and including every 1,000 milliseconds, or some other interval.

In certain embodiments, one or more of the photodetectors described herein are positioned in a detection block. Detection blocks of interest are configured to receive one or more photodetectors therein. The detection blocks described herein may be constructed from any convenient material. In some embodiments, detection blocks include a thermally conductive material. In certain embodiments, the thermally conductive material includes a metal, such as copper or aluminum. In certain cases, the detection block is manufactured from copper. In some instances, detection blocks are coated with a thermal compound (e.g., thermal paste). Thermal compounds of interest include, but are not limited to epoxies, silicones, urethanes and acrylates. One or more photodetectors may be secured to the detector block within a light detection module, for example, by a clamp described in U.S. Patent Application No.: 17/714,584, published as US 2022/0397513 A1, the disclosure of which is incorporated by reference in its entirety.

### Temperature sensors:

As described above, system 100 also includes temperature sensor 115 configured to measure a temperature of at least a portion of the light detection system 110. In embodiments, the temperature sensor is configured to measure any convenient portion of the light detection system. In some cases, the temperature sensor is configured to measure a portion of the light detection system that is associated with the gain of the light detection system. In some cases, temperature changes of the portion of the light detection system measured by the temperature sensor are representative of gain characteristics of the light detection system, or a photodetector thereof. In other cases, the temperature sensor may measure a portion of the light detection system where temperature changes are consistently correlated with temperature changes of one or more photodetectors of the light detection system.

In embodiments, the temperature sensor is configured to measure an ambient air temperature of the light detection system. In some embodiments, in which the light detection system is a clustered wavelength division (CWD) light detection system, the temperature sensor and clustered wavelength division (CWD) light detection system are mounted on a single substrate. For example, the temperature sensor may be mounted on a common baseplate used to also mount aspects of the clustered wavelength division (CWD) light detection system. In other such cases, the temperature sensor and clustered wavelength division light detection (CWD) system are mounted within a single housing.

In embodiments, the temperature sensor may be positioned at any convenient position relative to the light detection system or aspects thereof. For example, the temperature sensor may be positioned at any convenient position relative to a photodetector of the light detection system. In certain embodiments, in which the light detection system is a clustered wavelength division (CWD) light detection system, the temperature sensor is located within 50 mm of a light detection module of the clustered wavelength division (CWD) light detection system. For example, in some cases, the temperature sensor is located within 500 mm or less, 400 mm or less, 300 mm or less, 200 mm or less, 100 mm or less, such as 90 mm or less, 80 mm or less, 70 mm or less, 60 mm or less, 50 mm or less, 40 mm or less, 30 mm or less, 20 mm or less, 10 mm or less, 9 mm or less, 8 mm or less, 7 mm or less, 6 mm or less, 5 mm or less, 4 mm or less, 3 mm or less, 2 mm or less, 1 mm or less, 0.5 mm or less of a light detection module of the clustered wavelength division (CWD) light detection system. In other embodiments, in which the light detection system is a clustered wavelength division (CWD) light detection system, the temperature sensor is located more than 50 mm from a light detection module of the clustered wavelength division (CWD) light detection system. For example, in some cases, the temperature sensor is located more than 0.5 mm, more than 1 mm, more than 2 mm, more than 3 mm, more than 4 mm, more than 5 mm, more than 6 mm, more than 7 mm, more than 8 mm, more than 9 mm, more than 10 mm, more than 20 mm, more than 30 mm, more than 40 mm, more than 50 mm, more than 60 mm, more than 70 mm, more than 80 mm, more than 90 mm, more than 100 mm, more than 200 mm, more than 300 mm, more than 400 mm or more than 500 mm from a light detection module of the clustered wavelength division (CWD) light detection system.

Temperature sensors of interest are configured to measure a temperature at a fixed point in time and/or are configured to continuously measure a temperature and/or are configured to measure an average temperature over a period of time and/or are configured to measure a temperature when the temperature is relatively stable, i.e., when the temperature sensor reads substantially stable or unchanging results over a period of time. Temperature sensors may be any convenient electronic, e.g., digital temperature sensors, configured to output one or more signals to a processor indicative of a measured temperature to, e.g., a data acquisition system. Temperature sensors of interest may be configured to be operably coupled to one or more processors, directly or via a data acquisition component, for example. Any convenient operable connection to a processor may be employed, including wired or wireless connections. Temperature sensors of interest include, for example, thermocouple-based temperature sensors, a resistance temperature detector (RTD)-based temperature sensor, a thermistor-based temperature sensor, or combinations thereof. Temperature sensors of interest may be commercially available temperature sensors, such as those available from Hamamatsu Photonics.

**FIG. 1C** depicts an exemplary flow cytometer system according to another embodiment. System 130 includes light source 131, light detection system 132 and temperature sensor 133. Light detection system 132 is a CWD light detection system. CWD light detection system 132 includes six light detection modules 132a, 132b, 132c, 132d, 132e, 132f arranged in a polygonal configuration. Each light detection module includes one or more photodetectors, such as one or more avalanche photodetectors, to which a reverse bias voltage is applied in order to influence the gain of the light detection system and photodetectors thereof. Temperature sensor 133 is present in an exterior region of the polygonal configuration of light modules 132a, 132b, 132c, 132d, 132e, 132f. That is, temperature sensor 133 is positioned a specified distance away from the light modules 132a, 132b, 132c, 132d, 132e, 132f and the photodetectors therein, but nonetheless temperature sensor 133 is configured to measure a temperature of at least a portion of the light detection system 132. Temperature sensor 133 and light detection system 132 are mounted on the same substrate 139. System 130 is depicted with a housing removed; however, when present, temperature sensor 133 and light detection system 132 are mounted within a single housing.

In some instances, light detection systems additionally include a temperature regulation system configured to dissipate heat. In embodiments, temperature sensors may be positioned at any convenient location relative to such temperature regulation systems, such as positioned at some distance from one or more aspects of the temperature regulation system. For example, in embodiments where the light detection system is a CWD light detection system, light detection modules include a thermoelectric cooler in contact with a bottom surface of one or more detection blocks. The term "thermoelectric cooler" is used herein in its conventional sense to refer to a heat pump which transfers heat between the junction of two different surfaces (e.g., a "cool" surface and a "hot" surface) in response to the application of an electrical current. In certain embodiments, heat flux between the two different surfaces is generated by the Peltier effect and thermoelectric coolers of interest are Peltier heat pumps. In some embodiments, the two different surfaces (e.g. plates) of the thermoelectric cooler are formed from different materials (n-type semiconductors, p-type semiconductors), such as narrow band-gap semiconductors and heavy element materials having low thermal conductivity. For example, the surfaces of thermoelectric coolers of interest may be formed from semiconductors such as bismuth telluride, lead telluride, silicon germanium, bismuth-antimony alloys, and combinations thereof. In some instances, thermoelectric coolers are coated with a thermal compound (e.g., thermal paste). Thermal compounds of interest include, but are not limited to epoxies, silicones, urethanes and acrylates. In certain embodiments, thermoelectric coolers of interest include those described in U.S. Patent Publication No. 2004/0155251, U.S. Patent No. 6,499,306; 4,581,898; 4,922,822; 5,409,547 and 2,984,077, the disclosures of which are incorporated herein by reference.

In additional embodiments, light detection modules include a heat sink in thermal contact with the thermoelectric cooler. The heat sink may include, for example, heat dissipation fins. Heat dissipation fins according to embodiments may be any convenient shape configured to dissipate heat from the heat transfer block and may be a cylinder, cube, cone, cylinder, half sphere, star, triangular prism, rectangular prism (cuboid), hexagonal prism or other suitable polyhedron. For example, the heat dissipation fin may have a cross-section in the shape of a circle, oval, half-circle, crescent-shaped, star-shaped, square, triangle, rhomboid, pentagon, hexagon, heptagon, octagon, rectangle or other polygon. The heat sink may, in certain embodiments, include a plurality of heat dissipation fins, such as 2 or more heat dissipation fins, such as 5 or more, such as 10 or more, such as 15 or more, such as 25 or more, such as 50 or more and including 100 or more heat dissipation fins.

In embodiments, the temperature regulation system additionally includes an air intake at a bottom portion of each light detection module. Cool air received from the intake passes through the heat sink of each light detection module. Heat is transferred from the heat dissipation fins of the heat sink to the air. The resulting heated air is pooled from each light detection module and is expelled.

### Determining reverse bias voltage:

As described above, system 100 also includes a processor comprising memory 120. The processor and memory 120 are operably coupled, and the memory comprises instructions stored thereon, which when executed by the processor, cause the processor to receive the measured temperature; determine a reverse bias voltage based at least in part on a target gain of the light detection system and the measured temperature; and control the light detection system to apply the reverse bias voltage. **FIG. 1D** depicts a flow diagram illustrating these steps executed by the processor and memory 120.

Flow diagram 140 begins at step 141. At step 141, the processor and memory receive the measured temperature. In embodiments, the processor and memory are configured to receive the results of the temperature measurement from the temperature sensor (e.g., temperature sensor 115 or temperature sensor 133). The measured temperature is a temperature of at least a portion of the light detection system (e.g., light detection system 110 or CWD light detection system 132). Upon completing step 141, flow diagram 140 proceeds to step 142.

At step 142, the processor and memory determine a reverse bias voltage based at least in part on a target gain of the light detection system and the measured temperature. By target gain, it is meant a desired gain of the light detection system. In some cases, target gain refers to a desired gain of one or more photodetectors of the light detection system. In some instances, a target gain is determined based on aspects of the underlying irradiated particles or fluorescent light emitted by such particles, for example. In other instances, a target gain is received based on input from a user. Target gain main be received from a user directly or indirectly. For example, a user may explicitly specify a target gain or a user may adjust related configurations, based on which a target gain is identified.

In embodiments, a target gain is independent of the temperature of the light detection system or photodetectors thereof. That is, embodiments of the present invention determine a reverse bias voltage to apply to a light detection system in order to achieve the target gain at a measured temperature of at least a portion of the light detection system. In other words, embodiments of the present invention are configured to determine a reverse bias voltage to apply to the light detection system to achieve the target gain, given a measured temperature.

In embodiments, instructions stored in the memory, when executed by the processor, cause the processor to determine the reverse bias voltage by applying a model. In some embodiments, the model comprises an artificial neural network model, such as, for example, a deep learning model or a neural network, such as a convolutional neural network or a recurrent neural network. In other embodiments, the model comprises a curve-fitting model. Certain embodiments may comprise combinations thereof. Still other embodiments may comprise other types of models. In embodiments, models comprise at least two inputs, the first being a target gain of the light detection system and the second being the measured temperature. Based at least in part on these inputs, embodiments of models generate at least one output that is a reverse bias voltage value.

**FIG. 1E** depicts a model that is an artificial neural network according to an embodiment. Artificial neural network 150 is a trained neural network. That is, artificial neural network 150 is trained to generate a reverse bias voltage value 156 based on an inputted measured temperature 151 and target gain 152. In other words, artificial neural network 150 is trained to determine a value for the reverse bias voltage 156 that, when such reverse bias voltage 156 is applied to the light detection system, causes the light detection system to generate the specified target gain 152 at the measured temperature 151.

Artificial neural network 150 comprises input layer 153. Input layer 153 receives as input a temperature 151, e.g., a temperature of at least a portion of a light detection system measured by a temperature sensor (e.g., temperature sensor 115 or temperature sensor 133). Input layer 153 also receives as input a target gain 152. Inputting temperature 151 and target gain 152 into input layer 153 causes values to be propagated into and through the intermediate layers 154 of the artificial neural network 150, ultimately arriving at output layer 155. Such values flowing through artificial neural network 150, ultimately arriving at output layer 155, cause artificial neural network 150 to determine a reverse bias voltage 156, which value is output at output layer 155. The reverse bias voltage 156 is the voltage value determined by artificial neural network 150 based on the temperature 151 and gain 152, such that when the reverse bias voltage 156 is applied to the light detection system, the light detection system will exhibit the target gain 152.

In embodiments, the artificial neural network is a trained model. In some cases, the artificial neural network is trained using training data comprising a plurality of target gains and a plurality of temperatures associated with a plurality of reverse bias voltages. In certain embodiments, the memory comprises further instructions stored thereon, which when executed by the processor, cause the processor to train the model using training data comprising a plurality of target gains and a plurality of temperatures associated with a plurality of reverse bias voltages. Training data may be empirically collected data. In embodiments, such training data is collected from the same light detection system and temperature sensor or the same configuration of light detection system and temperature sensor. In embodiments, training data comprises temperature measurements of at least a portion of the light detection system, e.g., obtained from a temperature sensor, as well as corresponding reverse bias voltages applied to the light detection system or a photodetector thereof, and the observed gain values of the light detection system that result. In other cases, training data comprises changes in measured temperature and/or changes in reverse bias voltages and resulting changes in gain of the light detection system.

Any convenient model-training protocol may be applied, such as, for example, supervised learning techniques, semi-supervised learning techniques or unsupervised learning techniques, as such are known. In some cases, round robin training techniques may also be applied, as such are known.

In other embodiments, the model comprises a curve-fitting model. In some cases, the curve-fitting model is a regression model. In other cases, the curve-fitting model is a local regression model. In certain cases, the local regression model is a locally weighted scatterplot smoothing (LOWESS) model. A LOWESS model, as such is known, may be configured as follows. For a given data point (xᵢ, yᵢ), the Lowess fit at xᵢ, denoted as "Y̌ᵢ", is calculated by minimizing the following weighted least squares objective function: $\sum {\left({w}_{k}*\left({y}_{k}-\left({β}_{0}+{β}_{1}*\left({x}_{k}-{x}_{i}\right)\right)\right)\right)}^{∧} 2$ where wₖ is the weight assigned to data point (xₖ, yₖ) based on its distance to xᵢ; β₀ and β₁ are the regression coefficients of the local linear regression model; and k iterates through the data points within the local neighborhood of xᵢ.

In embodiments, the gain versus reverse bias voltage at any given temperature is fit using a LOWESS model. When a target gain is specified and a temperature of at least a portion of the light detection system is measured, embodiments apply a LOWESS model to identify the reverse bias voltage needed to achieve such gain. By achieving a certain target gain, it is meant, for example, minimizing a gain error, i.e., a difference between the gain of the light detection system and the target gain. In some cases, achieving a target gain of the light detection system means achieving a gain error of less than 0.5%.

In embodiments the LOWESS model is a trained or fit model. In some cases, the LOWESS model is trained or fitted using training data comprising a plurality of target gains and a plurality of temperatures associated with a plurality of reverse bias voltages. In embodiments, such training data is collected from the same light detection system and temperature sensor or the same configuration of light detection system and temperature sensor. In certain embodiments, the memory comprises further instructions stored thereon, which when executed by the processor, cause the processor to configure the model using training data comprising a plurality of target gains and a plurality of temperatures associated with a plurality of reverse bias voltages. Training data may be empirically collected data comprising temperature measurements of at least a portion of the light detection system, e.g., obtained from a temperature sensor, as well as corresponding reverse bias voltages applied to the light detection system or a photodetector thereof, and the observed gain values of the light detection system that result. In other cases, training data comprises changes in measured temperature and/or changes in reverse bias voltages and resulting changes in gain of the light detection system.

In embodiments, training a LOWESS model refers to identifying appropriate values for β₀ and β₁ using corresponding weights wₖ such that the model is capable of accurately identifying a reverse bias voltage corresponding to a measured temperature and target gain. Any convenient values or function may be selected the weight, wₖ, and such may vary as known in the art. In addition to the LOWESS model, other local regression models, including polynomial regression models, may also be employed in embodiments, including for example the LOESS (locally estimated scatterplot smoothing) model. Further details regarding such regression models, including, for example, LOWESS models, including training and applying such models, may be found in Cleveland, W. S. (1981). LOWESS: A Program for Smoothing Scatterplots by Robust Locally Weighted Regression. The American Statistician, 35(1), 54-54. https://doi.org/10.2307/2683591; as well as Cleveland, W.S. (1979) "Robust Locally Weighted Regression and Smoothing Scatterplots," Journal of the American Statistical Association, Vol. 74, pp. 829-836; and Cleveland, W.S. and Devlin, S.J. (1988) "Locally Weighted Regression: An Approach to Regression Analysis by Local Fitting," Journal of the American Statistical Association, Vol. 83, pp. 596-610, the disclosures of each of which are incorporated herein by reference in their entirety. Still further details of such models may be found in NIST, "LOESS (aka LOWESS)", section 4.1.4.4, *NIST*/*SEMATECH e-Handbook of Statistical Methods, available at* www.itl.nist.gov/div898/handbook/pmd/section1/pmd144.htm; as well as Hastie, Tibshirani, and Friedman (2009) "The Elements of Statistical Learning" (2nd ed.), the disclosures of which are incorporated herein by reference in their entirety.

Returning to flow diagram 140, upon completion of step 142, in which a reverse bias voltage is determined based at least in part on a target gain of the light detection system and the measured temperature, flow diagram 140 then proceeds to step 143. At step 143, the reverse bias voltage value determined at step 142 is applied to the light detection system to achieve the target gain. That is, the memory comprises instructions, which, when executed by the processor, cause the processor to control the light detection system to apply the reverse bias voltage.

As described herein, in some cases, embodiments of systems are configured such that they are capable of changing the reverse bias voltage applied to the light detection system under the control of the processor. For example, in some cases, the system is configured such that the processor can dynamically change the reverse bias voltage, e.g., by controlling a variable voltage source. In other cases, the system is configured such that the processor can dynamically change the reverse bias voltage by controlling a pulse-width modulation generator such that the reverse bias voltage applied to the light detection system 110 can be modulated using only a single voltage source (i.e., by adjusting a duty cycle corresponding to the voltage supply). In embodiments, the pulse-width modulation generator may be controlled digitally or analog, e.g., such as with switching.

In some cases, a reverse bias voltage is determined and configured to be applied during use of the system, i.e., when the system is deployed in the field. For example, the memory may comprise instructions, which, when executed by the processor, cause the processor to dynamically update the reverse bias voltage based on one or more of an updated temperature or an updated target gain. In other cases, a reverse bias voltage is determined and configured at system manufacturing time.

**FIG. 1F** shows a flow diagram illustrating steps executed by the processor and memory 120 according to another embodiment, in which the system is configured to periodically measure the temperature of at least a portion of the light detection system, and the light detection system applies the reverse bias voltage based on the updated measured temperature. Flow diagram 160 starts at step 161, in which the temperature sensor (e.g., temperature sensor 115 or temperature sensor 133) measures a temperature of at least a portion of the light detection system (e.g., light detection system 110 or CWD light detection system 132) is measured and that temperature is received by the processor and memory 120. Once a measured temperature is received at step 161, flow diagram 160 moves to step 162 next.

At step 162, a change in the measured temperature is compared against a threshold temperature change. For example, the measured temperature is compared against a previously measured temperature, or the measured temperature is compared against a temperature associated with a default setting. If the resulting temperature change is not greater than a specified threshold, flow diagram 160 returns from step 162 to step 161, such that the system periodically or continuously measures a temperature of at least a portion of the light detection system in order to determine whether the temperature has changed by a least a threshold amount. If the resulting temperature change is greater than a specified threshold, then flow diagram 160 proceeds from step 162 to step 163. In embodiment, the system is configured such that the specified temperature change is any convenient temperature change, such as, for example, a change of 0.01 C or greater, 0.1 C or greater, 0.5 C or greater, 1.0 C or greater, 2.0 C or greater, 3.0 C or greater, 4.0 C or greater, 5.0 C or greater.

Step 163 is identical to step 142 of flow diagram 140, and step 164 is identical to step 143 of flow diagram 140, and therefore details regarding these steps are not repeated here. Upon completing step 164, flow diagram 160 returns to step 161 to begin monitoring for temperature changes greater than a specified threshold, e.g., a change in the measured temperature versus the temperature used to determine the reverse bias voltage at step 163. Embodiments that employ flow diagram 160 are configured to periodically or continuously monitor a temperature of at least a portion of the light detection system, such that the effect of temperature on the resulting gain of the light detection system is mitigated due to the periodic or continuous application of updated reverse bias voltages to the light detection system.

Embodiments, such as the embodiment shown in **FIG. 1F****,** are configured to continuously monitor whether the temperature associated with the light detection system has changed by a specified amount and re-determine the reverse bias voltage to apply to the semiconductor detector to achieve the target gain of the semiconductor detector at the changed temperature. In embodiments, the specified change amount may be 0.01 C or greater, 0.1 C or greater, 0.5 C or greater, 1.0 C or greater, 2.0 C or greater, 3.0 C or greater, 4.0 C or greater, 5.0 C or greater.

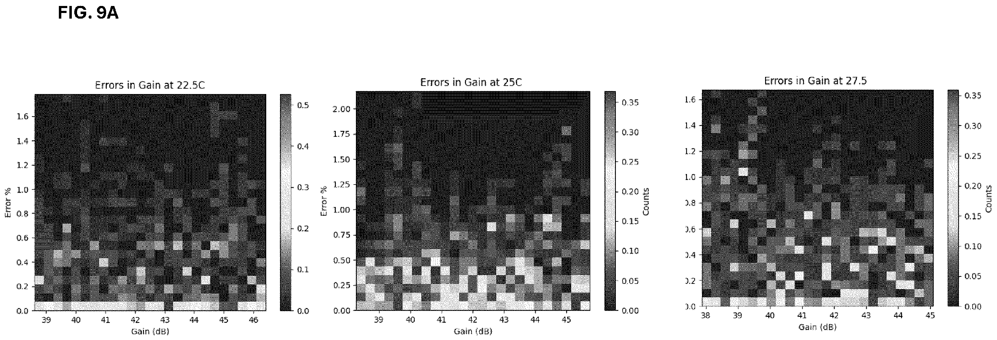

In still other embodiments, the memory comprises instructions, which, when executed by the processor, cause the processor to: estimate a first gain error of the light detection system at the measured temperature and the reverse bias voltage, further estimate a second gain error of the semiconductor detector at the measured temperature by ramping the reverse bias voltage up or down according to a search algorithm, and select a reverse bias voltage to apply to the light detection system to minimize the gain error, and control the light detection system to apply the selected reverse bias voltage. That is, embodiments of the present invention may leverage information regarding gain error (see, e.g., **FIGS. 9A-9B**) in order to search a range of potential reverse bias voltages in order to select a reverse bias voltage that minimizes expected gain error. That is, embodiments may be configured to determine and apply an appropriate reverse bias voltage in order to both achieve a desired target gain and to minimize potential deviation from the desired target gain, i.e., minimize gain error.

### FLOW CYTOMETERS

Aspects of the disclosure also include flow cytometers. As described in detail herein, flow cytometers of interest include, or are operably connected to, a light detection system configured to detect light from the irradiated particle, a temperature sensor configured to measure a temperature of at least a portion of the light detection system and a processor comprising memory operably coupled to the processor, wherein the memory comprises instructions stored thereon, which when executed by the processor, cause the processor to: receive the measured temperature; determine a reverse bias voltage based at least in part on a target gain of the light detection system and the measured temperature; and control the light detection system to apply the reverse bias voltage. Light detection systems of interest include a light detector, such as, for example, a semiconductor detector or an avalanche photodiode. In embodiments, light detection systems are configured to apply the reverse bias voltage to the light detector. In addition, flow cytometers include a light source configured to irradiate the particles in the flow stream at an interrogation point within a flow cell. Light received from the flow stream at the flow cell may be conveyed to the light detection system, e.g., a light detector thereof.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), photon counters, bolometers, photoresistors, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), photon counters, bolometers, photoresistors, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm to 1000 nm). In certain embodiments, detectors of interest are configured to collect spectra of light over a range of wavelengths. For example, flow cytometers may include one or more detectors configured to collect spectra of light over one or more of the wavelength ranges of 200 nm to 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application No. 17/672,288 published as U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103 (published as US 2024/0192122 A1); 18/657,618 (published as US 2024/0377307 A1); 18,657,623 (published as US 2024/0377325 A1) and 18/657,633 (published as US 2024-0377311 A1); the disclosures of which are herein incorporated by reference in their entirety.

**FIG. 1G** shows a system 170 for flow cytometry in accordance with an illustrative embodiment of the present invention. The system 170 includes a flow cytometer 192, a controller/processor 190 and a memory 195. The flow cytometer 192 includes one or more excitation lasers 165a-165c, a focusing lens 180, a flow cell 185, a forward-scatter photodetector 193, a light collection tube 166 comprising an optical adjustment component, and CWD light detection system 191.

The excitation lasers 165a-c emit light in the form of a laser beam. The wavelengths of the laser beams emitted from excitation lasers 165a-165c are 488 nm, 633 nm, and 325 nm, respectively, in the example system 170. The laser beams are first directed through one or more of beam splitters 175a and 175b. Beam splitter 175a transmits light at 488 nm and reflects light at 633 nm. Beam splitter 175b transmits UV light (light with a wavelength in the range of 10 to 400 nm) and reflects light at 488 nm and 633 nm.

The laser beams are then directed to a focusing lens 180, which focuses the beams onto the portion of a fluid stream where particles of a sample are located, within the flow cell 185. The flow cell 185 is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. CWD light detection system 191 includes light detection modules 171a-171e. The fluorescence emissions as well as the diffracted light, refracted light, reflected light, and scattered light may be routed to one or more of the forward-scatter photodetector 193 and light detection modules 171a-171e. An optical adjustment component (such as, for example, a multi-modal notch filter or a beam splitter) present in light collection tube 166 splits the beam of light received from flow cell 185 into first and second beams of light. Optical collection components, i.e., first fiber optic cable 173a and second fiber optic cable 173b, convey particle-modulated light from received from flow cell 185 to first and second light receivers 172a and 172b, respectively, i.e., first fiber optic cable 173a conveys the first beam of light to first light receiver 172a, and second fiber optic cable 173b conveys the second beam of light to second light receiver 172b.

The forward-scatter photodetector 193 is positioned slightly off axis from the direct beam through the flow cell and is configured to detect diffracted light, the excitation light that travels through or around the particle in mostly a forward direction. The intensity of the light detected by the forward-scatter photodetector is dependent on the overall size of the particle. The forward-scatter photodetector can include a photodiode. First light detection module 171d ultimately receives the first beam of light from first light receiver 172a. The signals detected at the forward-scatter photodetector 193 as well as the photodetectors in other light detection modules 171a, 171b, 171c, 171d, 171e can be converted to electronic signals (voltages) by the photodetectors. This data can provide information about the sample.

One of skill in the art will recognize that a flow cytometer in accordance with an embodiment of the present invention is not limited to the flow cytometer depicted in **FIG. 1G****,** but can include any flow cytometer known in the art. For example, a flow cytometer may have any number of lasers, beam splitters, filters, and photodetectors at various wavelengths and in various different configurations.

During use, cytometer operation is controlled by a controller/processor 190, and the measurement data from the photodetectors can be stored in the memory 195 and processed by the controller/processor 190. Although not shown explicitly, the controller/processor 190 is coupled to the photodetectors to receive the output signals therefrom, and may also be coupled to electrical and electromechanical components of the flow cytometer 192 to control the lasers, fluid flow parameters, and the like. For example, the controller/processor 190 is coupled to the light detection system 191 to apply a reverse bias voltage. Also not shown explicitly, the controller/processor 190 can be coupled to temperature sensor 194 to receive the output signals therefrom indicating the measured temperature of at least a portion of the light detection system 191. Temperature sensor 194 is located a specified distance away from CWD light detection system 191. Input/output (I/O) capabilities 197 may be provided also in the system. The memory 195, controller/processor 190, and I/O 197 may be entirely provided as an integral part of the flow cytometer 192. In such an embodiment, a display may also form part of the I/O capabilities 197 for presenting experimental data to users of the cytometer 192. Alternatively, some or all of the memory 195 and controller/processor 190 and I/O capabilities may be part of one or more external devices such as a general purpose computer. In some embodiments, some or all of the memory 195 and controller/processor 190 can be in wireless or wired communication with the cytometer 192. The controller/processor 190 in conjunction with the memory 195 and the I/O 197 can be configured to perform various functions related to the preparation and analysis of a flow cytometer experiment. The controller/processor 190 in conjunction with the memory 195 and the I/O 197 can also be configured to receive a measured temperature from temperature sensor 194, determine a reverse bias voltage based at least in part on a target gain of the light detection system 191 and the measured temperature and then control the light detection system 191 to apply the reverse bias voltage. In some cases, the controller/processor 190 in conjunction with the memory 195 and the I/O 197 may be configured to determine a target gain. In other cases, the controller/processor 190 in conjunction with the memory 195 and the I/O 197 may be configured to receive a target gain, e.g., ultimately from a user.

Different fluorescent molecules used for a flow cytometer experiment will emit light in their own characteristic wavelength bands. The particular fluorescent labels used for an experiment and their associated fluorescent emission bands may be selected to generally coincide with the filter windows of the photodetectors. The I/O 197 can be configured to receive data regarding a flow cytometer experiment having a panel of fluorescent labels and a plurality of cell populations having a plurality of markers, each cell population having a subset of the plurality of markers. The I/O 197 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 195. The controller/processor 190 can be configured to evaluate one or more assignments of labels to markers.

In some embodiments, the subject systems are particle sorting systems that are configured to sort particles with an enclosed particle sorting module, such as those described in U.S. Patent No. 11,609,177, the disclosure of which is incorporated herein by reference. In certain embodiments, particles (e.g., cells) of the sample are sorted using a sort decision module having a plurality of sort decision units, such as those described in U.S. Patent No. 11,085,868, the disclosure of which is incorporated herein by reference. In some embodiments, systems for sorting components of a sample include a particle sorting module having deflection plates, such as described in U.S. Patent No. 11,609,177, the disclosure of which is incorporated herein by reference.

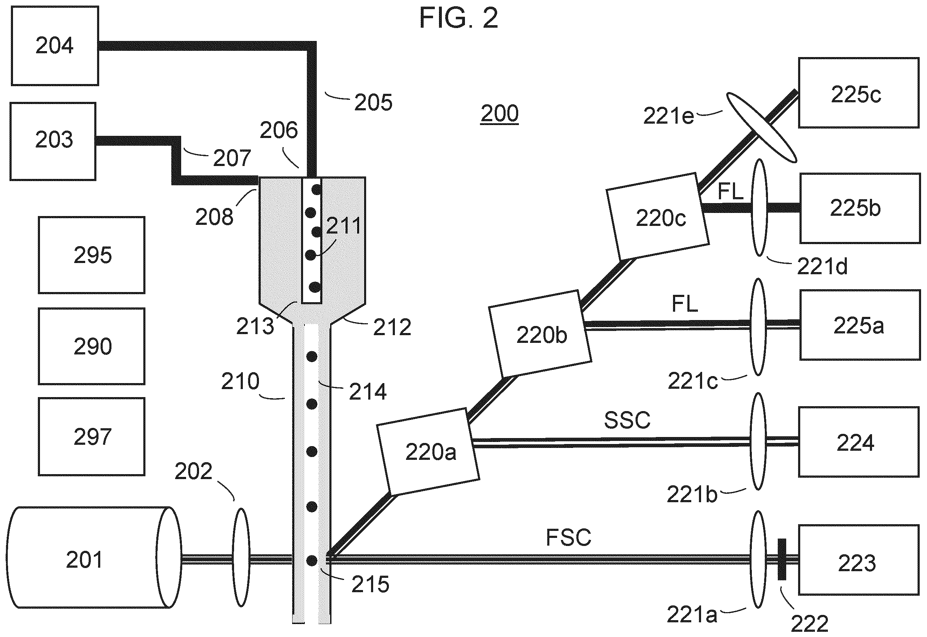

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent No. 11,609,177, the disclosure of which is incorporated herein by reference. In certain embodiments, particles (e.g., cells) of the sample are sorted using a sort decision module having a plurality of sort decision units, such as those described in U.S. Patent No. 11,085,868, the disclosure of which is incorporated herein by reference. In some embodiments, systems for sorting components of a sample include a particle sorting module having deflection plates, such as described in U.S. Patent No. 11,609,177, the disclosure of which is incorporated herein by reference.

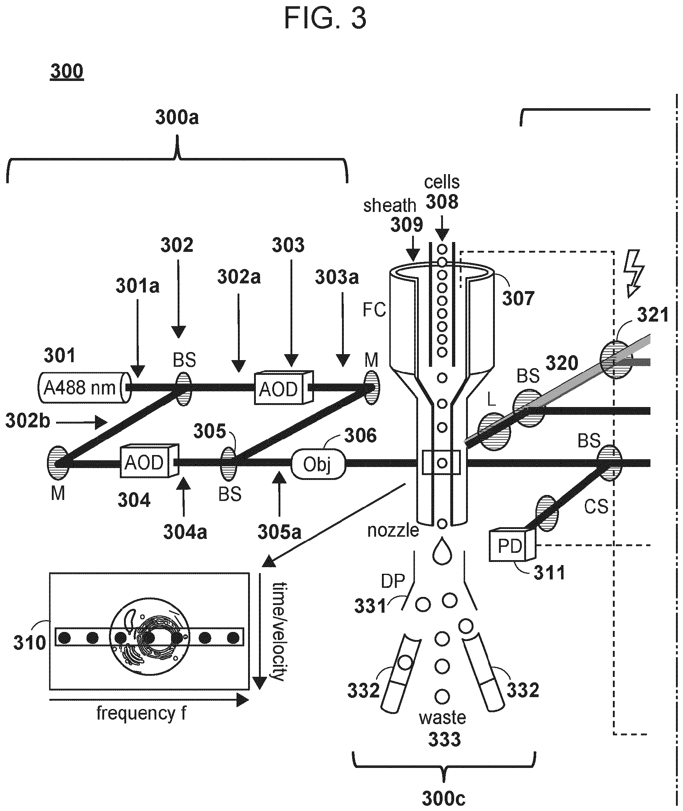

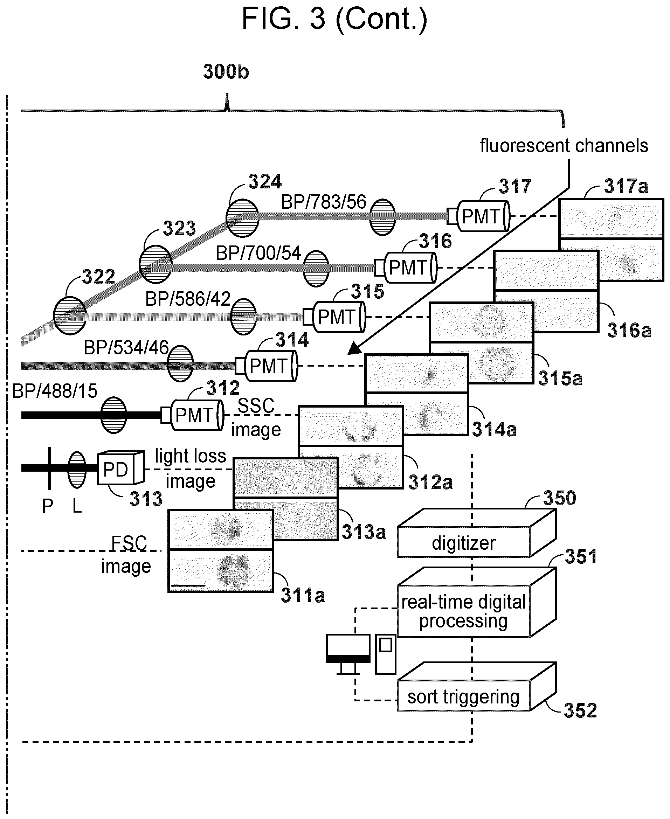

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent No. 11,680,889, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent No. 11,609,177, the disclosure of which is incorporated herein by reference. In certain embodiments, sorting component 300c includes a sort decision module having a plurality of sort decision units, such as those described in U.S. Patent No. 11,085,868, the disclosure of which is incorporated herein by reference.

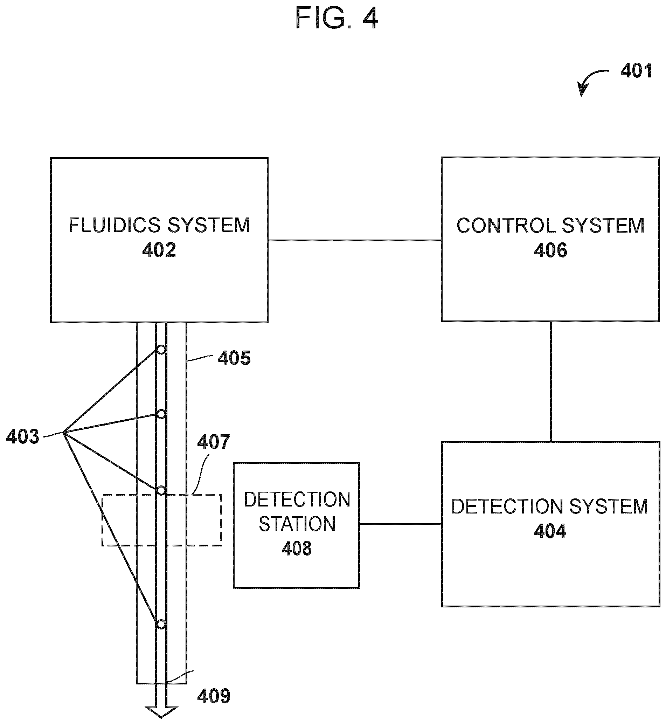

In some embodiments, systems are particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

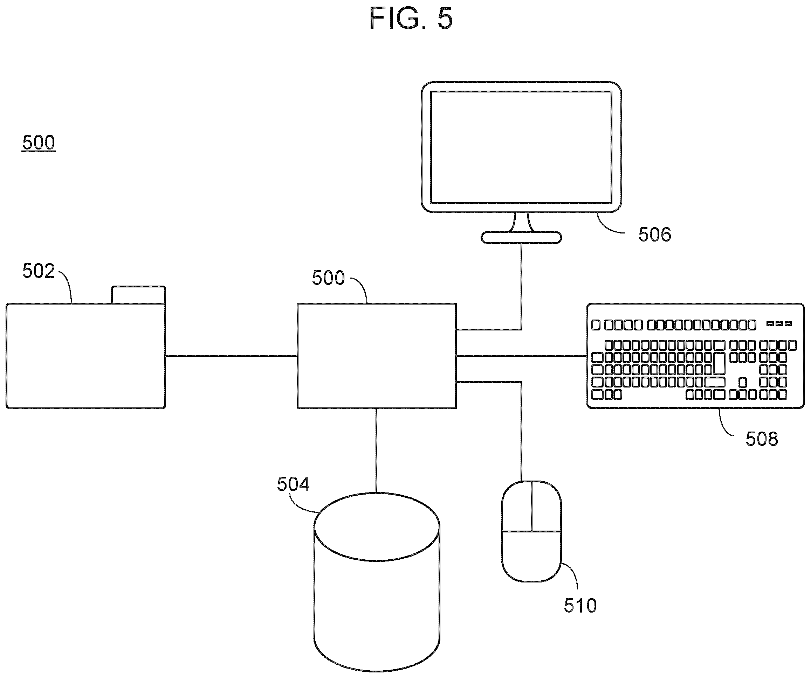

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

**A** particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

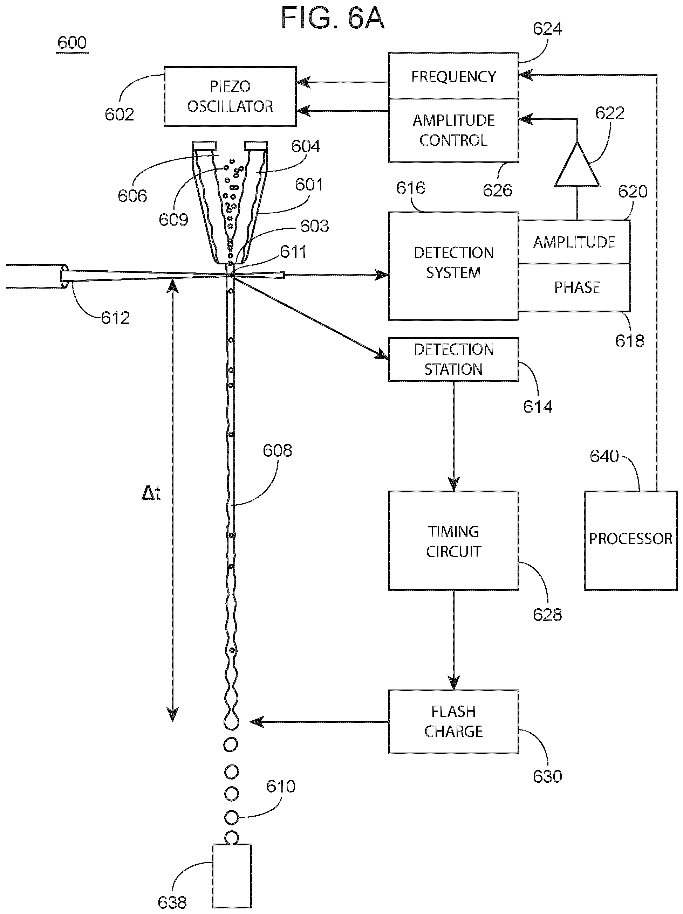

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

**A** detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

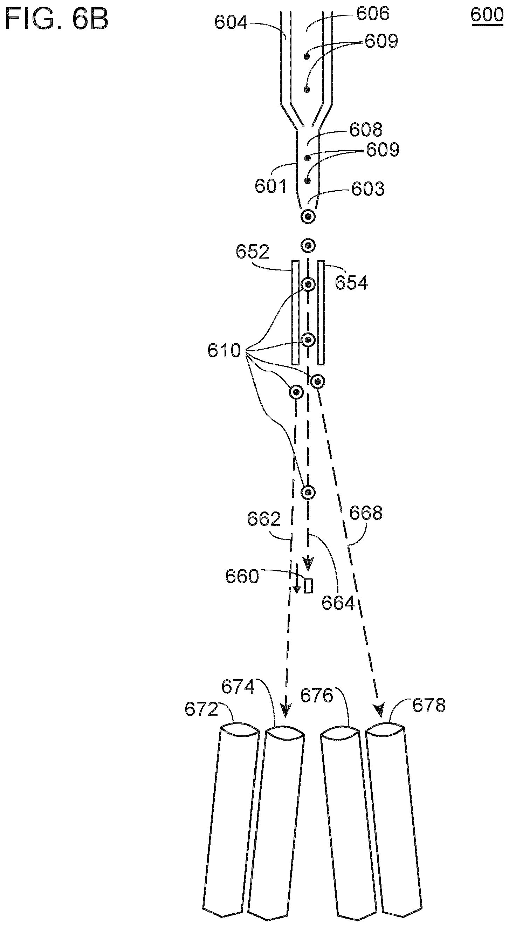

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in **FIG. 6B**). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### METHODS

Aspects of the disclosure also include methods comprising: measuring a temperature of at least a portion of a light detection system, determining a reverse bias voltage based at least in part on a target gain of the light detection system and the measured temperature, and controlling the light detection system to apply the reverse bias voltage. Some embodiments further comprise: irradiating a sample comprising particles in a flow stream with a light source in a flow cytometer, and detecting light from the irradiated particles with the light detection system.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian," where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### COMPUTER-CONTROLLED SYSTEMS

Aspects of the present disclosure further include computer-controlled systems, where the systems include one or more computers for complete automation or partial automation. In some embodiments, systems include a computer having a non-transitory computer readable storage medium with a computer program stored thereon, where the computer program when loaded on the computer includes instructions for analyzing data from one or more light detection systems described herein.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

**Memory** may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

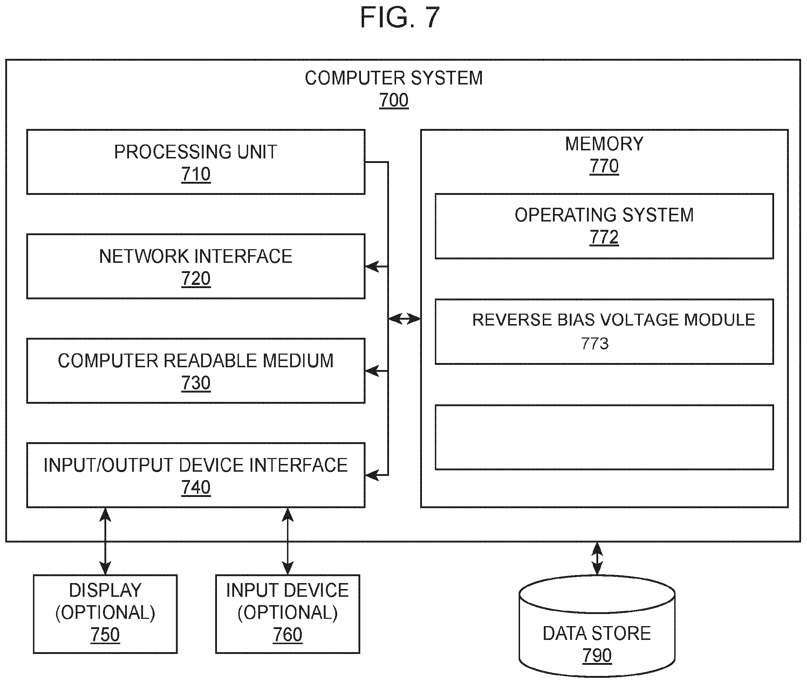

**FIG. 7** depicts a general architecture of an example computing device 700 according to certain embodiments. The general architecture of the computing device 700 includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

**The** memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure. For example reverse bias voltage module 773 may comprise instructions and other information for receiving a measured temperature from a temperature sensor, determining a reverse bias voltage based at least in part on a target gain of the light detection system and the measured temperature, and controlling the light detection system to apply the reverse bias voltage. In embodiments, the reverse bias voltage module 773 comprises instructions related to applying a model, such as an artificial neural network model or a LOWESS model in connection with determining a reverse bias voltage.

### KITS

Aspects of the invention further include kits, where kits include one or more of the flow cytometer systems or aspects thereof or non-transitory computer readable storage medium as described herein. In certain instances, kits can include one or more assay components (e.g., labeled reagents, buffers, etc., such as described above). In some instances, the kits may further include a sample collection device, e.g., a lance or needle configured to prick skin to obtain a whole blood sample, a pipette, etc., as desired.

**The** various assay components of the kits may be present in separate containers, or some or all of them may be pre-combined. For example, in some instances, one or more components of the kit, e.g., each deflection plate of a pair of deflection plates of a droplet deflector, are present in a sealed pouch, e.g., a sterile foil pouch or envelope.

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject flow cytometer systems, methods and computer systems find use in a variety of applications where it is desirable to detect and, in some cases, analyze or sort particle components in a sample in a fluid medium, such as a biological sample. Embodiments of the invention find use where it is desirable to provide a flow cytometer with improved cell sorting accuracy, enhanced particle collection, expanded particle analytics or collection.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

The following is presented by way of example and not by way of limitation:

### EXPERIMENTAL

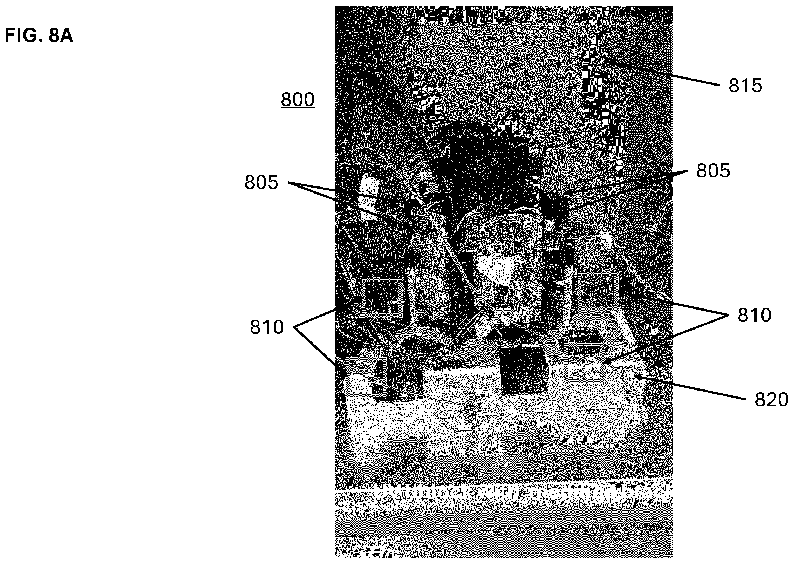

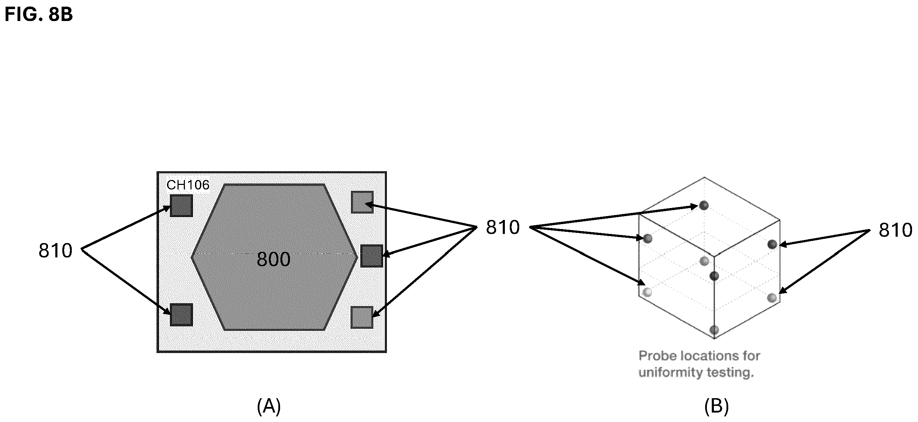

**FIG. 8A** shows a light detection system according to an embodiment. Light detection system 800 is a CWD light detection system. Light detection system 800 includes a plurality of light detection modules 805 arranged in a polygonal configuration. Various locations 810 for mounting a temperature sensor are noted. Each location 810 for mounting a temperature sensor positions the temperature sensor to measure a temperature of at least a portion of the light detection system. Each location 810 for mounting a temperature sensor is within the housing 815 of the CWD light detection system 800 and is present on the same substrate 820 that the CWD light detection system 800 is mounted on. **FIG. 8B** shows a top view (panel (A)) and an isometric view (panel (B)) of the various locations 810 for mounting a temperature sensor.

**FIG. 9A** shows histogram data of gain errors after using a deep learning-based model to calculate a reverse bias voltage at different temperatures. That is, the target gain for a light detection system is plotted along the x-axis of each plot, and different error values in the resulting gain of the light detection system are plotted along the y-axis. The light detection system 800 shown in **FIG. 8A** is used to collect the gain error data presented in **FIG. 9A****.** Such error values are the gain errors resulting after applying a reverse bias voltage to the light detection system, where such reverse bias voltage is determined by applying a deep-learning model trained to determine a reverse bias voltage for the light detection system according to an embodiment. As shown in the plots, in this embodiment, the deep learning technique corrects gain errors of the light detection system to within 1% for 96% of datapoints.

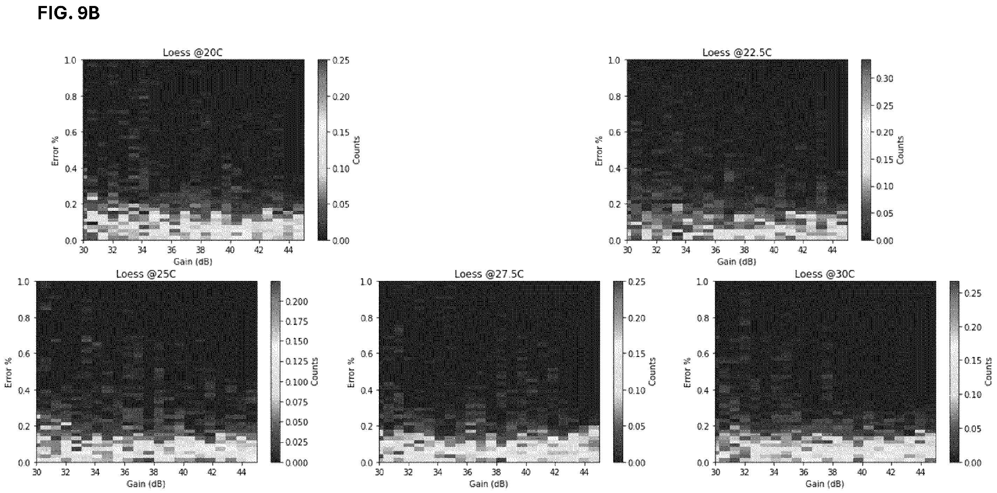

**FIG. 9B** shows similar histogram data of gain errors after using a LOWESS model to calculate a reverse bias voltage at different temperatures. The light detection system 800 shown in **FIG. 8A** is used to collect the gain error data presented in **FIG. 9B****.** As shown in the plots, in this embodiment, the LOWESS model corrects gain errors of the light detection system to within 0.5% for 95% of datapoints and to within 1% for 100% of datapoints.

**FIG. 10** presents a plot showing the relationship between reverse bias voltage (x-axis) applied to a device and a resulting output voltage indicative of the device gain (y-axis) at a plurality of different temperatures. As shown in the plot, the resulting output voltage indicative of the device gain is related to the reverse bias voltage applied to a device. Moreover, the curves diverge from each other at different temperatures, particularly at higher reverse bias voltage values. The results presented in **FIG. 10** illustrate how embodiments of the present disclosure may be employed to maintain a consistent device gain across a range of different temperatures by determining and applying appropriate reverse bias voltages.

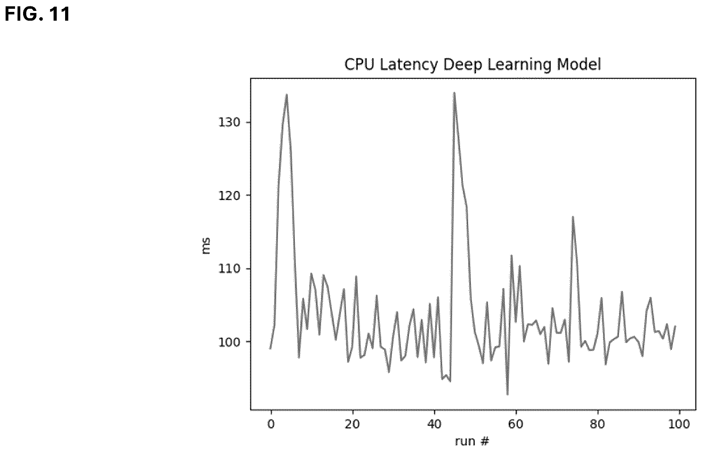

**FIG. 11** presents a plot showing empirical results of CPU latency for determining a reverse bias voltage using a deep learning model according to an embodiment of the disclosure. The resulting CPU latencies across a plurality of runs of the deep learning model during a 60-minute time period, during which the ambient temperature changed 1.5 C, illustrate the feasibility of a deep learning-based approach according to embodiments, notwithstanding the computational complexity of deep learning-based models.

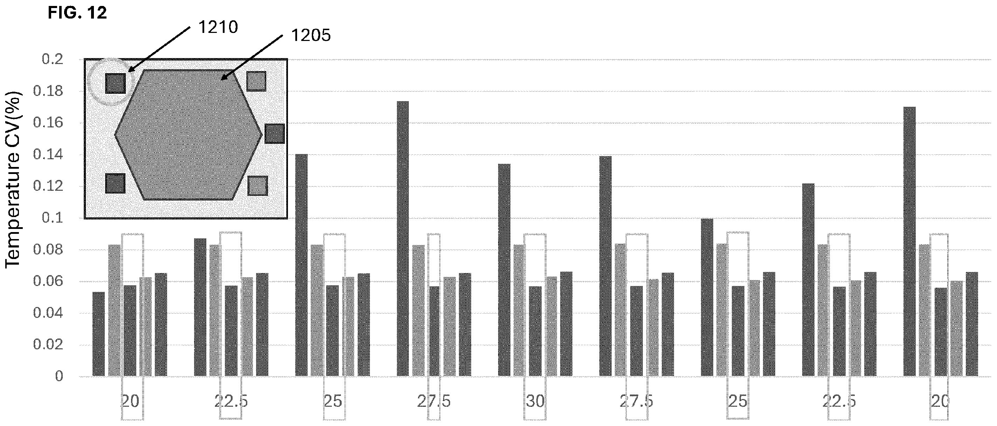

**FIG. 12** presents empirical data related to the coefficient of variation associated with temperature measurements at five different potential locations of a temperature sensor relative to a light detection system, as shown in **FIG. 8B.** When the temperature sensor is located at position 1210 relative to light detection system 1205, an acceptable temperature stability is achieved with a less than 0.1% coefficient of variation.

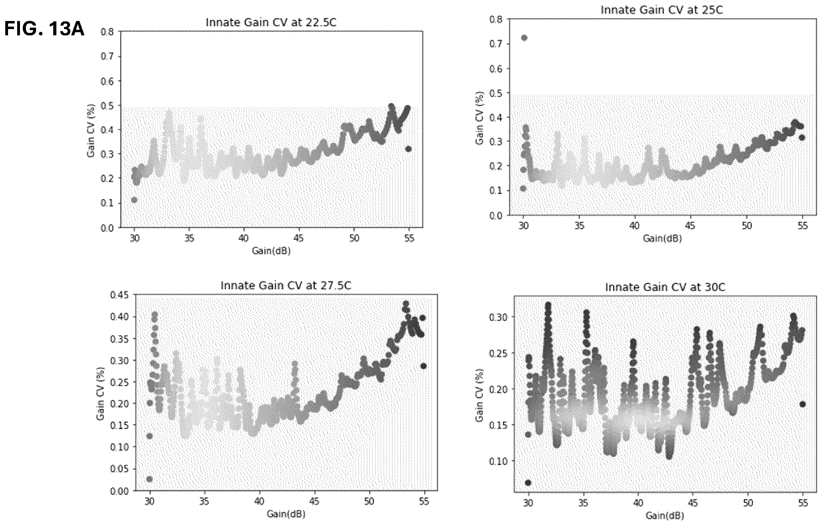

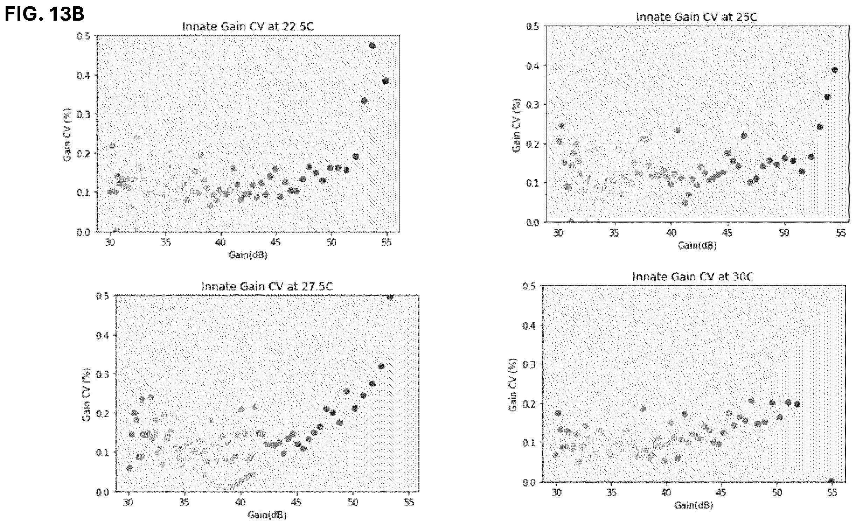

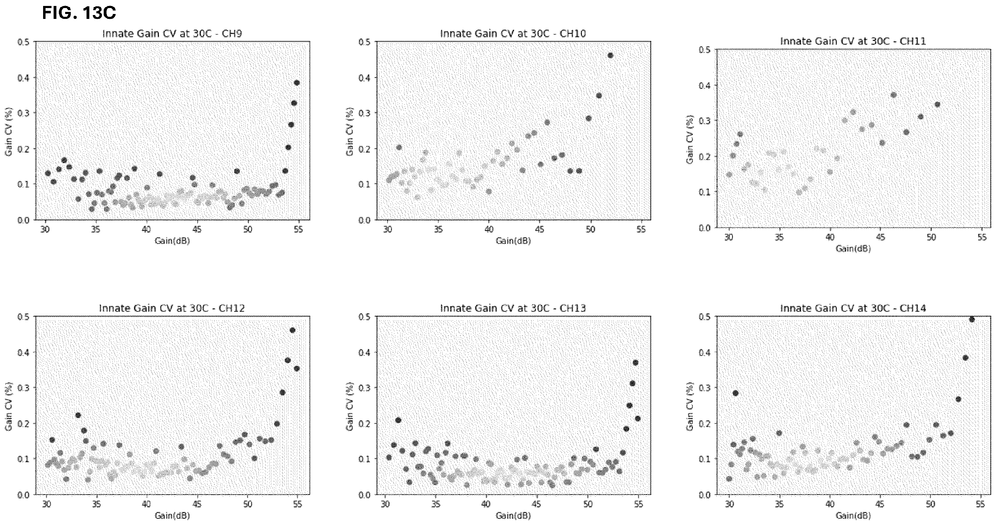

**FIGS. 13A-13C** present further empirical data related to embodiments of the present disclosure. **FIGS. 13A-13B** present certain gain-temperature relationships, demonstrating a less than 0.5% coefficient of variation across all temperatures examined. **FIG. 13C** presents certain gain-temperature relationships, demonstrating a less than 0.5% coefficient of variation across all examined channels of a light detection system.

Notwithstanding the appended claims, the disclosure is also defined by the following clauses:
1. A flow cytometer system comprising:
   a light source configured to irradiate a sample comprising a particle in a flow stream;
   a light detection system configured to detect light from the irradiated particle;
   a temperature sensor configured to measure a temperature of at least a portion of the light detection system; and
   a processor comprising memory operably coupled to the processor, wherein the memory comprises instructions stored thereon, which when executed by the processor, cause the processor to:
   receive the measured temperature;
   determine a reverse bias voltage based at least in part on a target gain of the light detection system and the measured temperature; and
   control the light detection system to apply the reverse bias voltage.
2. The system according to clause 1, wherein the instructions, when executed by the processor, cause the processor to determine the reverse bias voltage by applying a model.
3. The system according to clause 2, wherein the model comprises an artificial neural network model or a curve-fitting model.
4. The system according to clause 3, wherein the model comprises an artificial neural network model.
5. The system according to clause 4, wherein the artificial neural network model comprises a deep learning model.
6. The system according to clause 3, wherein the model comprises a curve-fitting model.
7. The system according to clause 6, wherein the curve-fitting model comprises a local regression model.
8. The system according to clause 7, wherein the local regression model comprises a locally weighted scatterplot smoothing (LOWESS) model.
9. The system according to any of the preceding clauses, wherein the memory comprises further instructions stored thereon, which when executed by the processor, cause the processor to:
   receive the target gain of the light detection system.
10. The system according to clause 9, wherein the target gain is received based on a user input.
11. The system according to any of the preceding clauses, wherein the temperature of the portion of the light detection system comprises an ambient air temperature of the light detection system.
12. The system according to any of the preceding clauses, wherein the light detection system is a clustered wavelength division (CWD) light detection system.
13. The system according to clause 12, wherein the temperature sensor and clustered wavelength division (CWD) light detection system are mounted on a single substrate.
14. The system according to clause 12, wherein the temperature sensor and clustered wavelength division light detection (CWD) system are mounted within a single housing.
15. The system according to clause 14, wherein the temperature sensor is located within 50 mm of a light detection module of the clustered wavelength division (CWD) light detection system.
16. The system according to clause 14, wherein the temperature sensor is located more than 50 mm from a light detection module of the clustered wavelength division (CWD) light detection system.
17. The system according to any of the preceding clauses, further comprising:
   a variable voltage source configured to supply a reverse bias voltage to the light detection system.
18. The system according to clause 17, wherein controlling the light detection system to apply the reverse bias voltage comprises controlling the reverse bias voltage by the variable voltage source.
19. The system according to any of the preceding clauses, wherein the temperature sensor is configured to continuously measure the temperature, and the light detection system applies the reverse bias voltage based on the continuously measured temperature.
20. The system according to any of the preceding clauses, wherein the light detection system comprises a photodetector.
21. The system according to clause 20, wherein the light detection system is configured to apply the reverse bias voltage to the photodetector.
22. The system according to any of the preceding clauses, wherein the light detection system comprises a semiconductor detector.
23. The system according to any of the preceding clauses, wherein the light detection system comprises an avalanche photodiode.
24. A method comprising:
   measuring a temperature of at least a portion of a light detection system;
   determining a reverse bias voltage based at least in part on a target gain of the light detection system and the measured temperature; and
   controlling the light detection system to apply the reverse bias voltage.
25. The method according to clause 24, further comprising:
   irradiating a sample comprising particles in a flow stream with a light source in a flow cytometer; and
   detecting light from the irradiated particles with the light detection system.
26. The method according to any of clauses 24 or 25, wherein determining the reverse bias voltage comprises applying a model.
27. The method according to clause 26, wherein the model comprises an artificial neural network model or a curve-fitting model.
28. The method according to clause 27, wherein the model comprises an artificial neural network model.
29. The method according to clause 28, wherein the artificial neural network model comprises a deep learning model.
30. The method according to clause 27, wherein the model comprises a curve-fitting model.
31. The method according to clause 30, wherein the curve-fitting model comprises a local regression model.
32. The method according to clause 31, wherein the local regression model comprises a locally weighted scatterplot smoothing (LOWESS) model.
33. The method according to any of clauses 24 to 32, further comprising:
   receiving the target gain of the light detection system.
34. The method according to clause 33, wherein the target gain is received based on a user input.
35. The method according to any of clauses 24 to 34, wherein the temperature of the portion of the light detection system comprises an ambient air temperature of the light detection system.
36. The method according to any of clauses 24 to 35, wherein the light detection system is a clustered wavelength division (CWD) light detection system.
37. The method according to clause 36, wherein measuring the temperature of at least the portion of a light detection system comprises using a temperature sensor.
38. The method according to clause 37, wherein the temperature sensor and clustered wavelength division light detection (CWD) system are mounted on a single substrate.
39. The method according to clause 37, wherein the temperature sensor and clustered wavelength division (CWD) light detection system are mounted within a single housing.
40. The method according to clause 39, wherein the temperature sensor is located within 50 mm of a light detection module of the clustered wavelength division (CWD) light detection system.
41. The method according to clause 39, wherein the temperature sensor is located more than 50 mm from a light detection module of the clustered wavelength division (CWD) light detection system.
42. The method according to any of clauses 24 to 41, wherein controlling the light detection system to apply the reverse bias voltage comprises controlling a voltage level output from a variable voltage source configured to supply a reverse bias voltage to the light detection system.
43. The method according to any of clauses 24 to 42, further comprising:
   continuously measuring the temperature, and
   applying the reverse bias voltage based on the continuously measured temperature.
44. The method according to any of clauses 24 to 43, wherein the light detection system comprises a light detector.
45. The method according to clause 44, wherein the light detection system is configured to apply the reverse bias voltage to the light detector.
46. The method according to any of clauses 24 to 45, wherein the light detection system comprises a semiconductor detector.
47. The method according to any of clauses 24 to 46, wherein the light detection system comprises an avalanche photodiode.
48. A non-transitory computer readable storage medium comprising instructions stored thereon, the instructions comprising:
   algorithm for obtaining a temperature of at least a portion of a light detection system;
   algorithm for determining a reverse bias voltage based at least in part on a target gain of the light detection system and the measured temperature; and
   algorithm for controlling the light detection system to apply the reverse bias voltage.
49. The non-transitory computer readable storage medium according to clause 48, wherein algorithm for determining the reverse bias voltage comprises applying a model.
50. The non-transitory computer readable storage medium according to clause 49, wherein the model comprises an artificial neural network model or a curve-fitting model.
51. The non-transitory computer readable storage medium according to clause 50, wherein the model comprises an artificial neural network model.
52. The non-transitory computer readable storage medium according to clause 51, wherein the artificial neural network model comprises a deep learning model.
53. The non-transitory computer readable storage medium according to clause 50, wherein the model comprises a curve-fitting model.
54. The non-transitory computer readable storage medium according to clause 53, wherein the curve-fitting model comprises a local regression model.
55. The non-transitory computer readable storage medium according to clause 54, wherein the local regression model comprises a locally weighted scatterplot smoothing (LOWESS) model.
56. The non-transitory computer readable storage medium according to any of clauses 48 to 55, further comprising:
   algorithm for receiving the target gain of the light detection system.
57. The non-transitory computer readable storage medium according to clause 56, wherein the target gain is received based on a user input.
58. The non-transitory computer readable storage medium according to any of clauses 48 to 57, wherein the temperature of the portion of the light detection system comprises an ambient air temperature of the light detection system.
59. The non-transitory computer readable storage medium according to any of clauses 48 to 58, wherein the light detection system is a clustered wavelength division (CWD) light detection system.
60. The non-transitory computer readable storage medium according to clause 59, wherein algorithm for obtaining a temperature of at least a portion of a light detection system comprises obtaining the temperature from a temperature sensor.
61. The non-transitory computer readable storage medium according to clause 60, wherein the temperature sensor and clustered wavelength division light detection (CWD) system are mounted on a single substrate.
62. The non-transitory computer readable storage medium according to clause 60, wherein the temperature sensor and clustered wavelength division (CWD) light detection system are mounted within a single housing.
63. The non-transitory computer readable storage medium according to clause 62, wherein the temperature sensor is located within 50 mm of a light detection module of the clustered wavelength division (CWD) light detection system.
64. The non-transitory computer readable storage medium according to clause 62, wherein the temperature sensor is located more than 50 mm from a light detection module of the clustered wavelength division (CWD) light detection system.
65. The non-transitory computer readable storage medium according to any of clauses 48 to 64, wherein controlling the light detection system to apply the reverse bias voltage comprises controlling a voltage level output from a variable voltage source configured to supply a reverse bias voltage to the light detection system.
66. The non-transitory computer readable storage medium according to any of clauses 48 to 65, further comprising:
   algorithm for continuously measuring the temperature, and
   algorithm for applying the reverse bias voltage based on the continuously measured temperature.
67. The non-transitory computer readable storage medium according to any of clauses 48 to 66, wherein the light detection system comprises a light detector.
68. The non-transitory computer readable storage medium according to clause 67, wherein the light detection system is configured to apply the reverse bias voltage to the light detector.
69. The non-transitory computer readable storage medium according to any of clauses 48 to 68, wherein the light detection system comprises a semiconductor detector.
70. The non-transitory computer readable storage medium according to any of clauses 48 to 69, wherein the light detection system comprises an avalanche photodiode.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A flow cytometer system comprising:
a light source configured to irradiate a sample comprising a particle in a flow stream;
a light detection system configured to detect light from the irradiated particle;
a temperature sensor configured to measure a temperature of at least a portion of the light detection system; and
a processor comprising memory operably coupled to the processor, wherein the memory comprises instructions stored thereon, which when executed by the processor, cause the processor to:
receive the measured temperature;
determine a reverse bias voltage based at least in part on a target gain of the light detection system and the measured temperature; and
control the light detection system to apply the reverse bias voltage.

2. The system according to claim 1, wherein the instructions, when executed by the processor, cause the processor to determine the reverse bias voltage by applying a model.

3. The system according to claim 2, wherein the model comprises an artificial neural network model or a curve-fitting model.

4. The system according to claim 3, wherein the model comprises an artificial neural network model.

5. The system according to claim 4, wherein the artificial neural network model comprises a deep learning model.

6. The system according to claim 3, wherein the model comprises a curve-fitting model.

7. The system according to claim 6, wherein the curve-fitting model comprises a local regression model.

8. The system according to claim 7, wherein the local regression model comprises a locally weighted scatterplot smoothing (LOWESS) model.

9. The system according to any of the preceding claims, wherein the memory comprises further instructions stored thereon, which when executed by the processor, cause the processor to:
receive the target gain of the light detection system.

10. The system according to claim 9, wherein the target gain is received based on a user input.

11. The system according to any of the preceding claims, wherein the temperature of the portion of the light detection system comprises an ambient air temperature of the light detection system.

12. The system according to any of the preceding claims, wherein the light detection system is a clustered wavelength division (CWD) light detection system.

13. The system according to any of the preceding claims, further comprising:
a variable voltage source configured to supply a reverse bias voltage to the light detection system.

14. The system according to any of the preceding claims, wherein the temperature sensor is configured to continuously measure the temperature, and the light detection system applies the reverse bias voltage based on the continuously measured temperature.

15. A method comprising:
measuring a temperature of at least a portion of a light detection system;
determining a reverse bias voltage based at least in part on a target gain of the light detection system and the measured temperature; and
controlling the light detection system to apply the reverse bias voltage.
